# EUROPEAN PATENT SPECIFICATION

(11) **EP 0 270 896 B1**
(45) Date of publication and mention of the grant of the patent: **09.04.1997**
(21) Application number: 87117245.8
(22) Date of filing: 23.11.1987
(51) Int. Cl.: G06F 13/12, G06F 13/40

(54) **Data link and method of transferring data for personal computer system**
Datenübermittlungsstrecke und Verfahren zur Datenübertragung für persönliches Rechnersystem
Liaison de données et méthode de transfert de données pour système d'ordinateur personnel

(30) Priority: 08.12.1986 US 938848
(43) Date of publication of application: 15.06.1988
(73) Proprietor: Sun River Corporation, Jackson Mississippi 39213 (US)
(72) Inventor: Youngblood, Gerald F., Jackson Mississippi 39211 (US); Hughes, Ron D., Ridgeland Mississippi 39157 (US); Rice, Kester B., Madison Mississippi 39110 (US)
(74) Representative: Senior, Alan Murray

(56) References cited:
- EP-A- 0 109 337
- EP-A- 0 228 124
- US-A- 4 038 644
- US-A- 4 577 317
- PATENT ABSTRACTS OF JAPAN, vol. 6, no. 62 (P-111)[940], 21st April 1982; & JP-A-57 5139 (TOKYO SHIBAURA DENKI K.K.) 11-01-1982
- PATENT ABSTRACTS OF JAPAN, vol. 9, no. 120 (P-358)[1843], 24th May 1985;& JP-A-60 5371 (OKI DENKI KOGYO K.K.) 11-01-1985
- PATENT ABSTRACTS OF JAPAN, vol. 10, no. 379 (E-465)[2436], 18th December 1986; & JP-A-61 170 160 (MATSUSHITA ELECTRIC IND. CO., LTD) 31-07-1986

## Description

### BACKGROUND OF THE INVENTION

### 1. Field of Invention.

The invention relates to the field of real time, multiuser, time-share computer systems and specifically to multiuser personal computer systems for running computer software written for individual personal computers, including software that requires the interactive exchange of high resolution computer graphics information.

### 2. Description of Related Art.

Software manufacturers have developed a considerable number of software programs for the personal computer. The development of software packages, particularly for business applications, has been assisted immensely by the establishment of standard operating hardware that is accepted through out the industry. The large number of software packages that have been written for the personal computer and the enormous effort made to develop software for business applications combine to encourage hardware manufactures to develop computer systems that can run existing software.

Many software packages have been written to directly access specific elements of operating hardware found on the standard personal computer. Therefore, any computer must have direct access to the hardware found on the standard PC if that computer is to execute conventional software packages. Many software packages have also been written so that the computer can perform only one function at a time. These single tasking systems essentially tie down all the hardware on the PC so that multitasking at the PC is a nontrivial problem.

A new generation of the personal computer has recently been introduced by Compaq. At the most basic level, the 8088 microprocessor, used as the central processing unit (CPU) of current personal computers such as the IBM XT and AT series has been replaced with a vastly more powerful CPU, the 80386 microprocessor manufactured by Intel. The '386 CPU can execute the software packages written for the current generation of PC. The full capabilities of the '386 CPU, however, cannot be exploited by software written to run on a PC using the less powerful 8088 CPU.

The capabilities of the '386 CPU may be further exploited by running several applications programs concurrently. The '386 microprocessor has an extraordinary capability to link together a large number of remote, low cost work stations by appearing to each station as a separate CPU that is dedicated to serving that one station. This multitasking, multiuser mode of operation, however, is limited by the number of input/output ports available at the computer. It is physically impractical to place enough I/O ports in close enough proximity to the CPU to fully exploit the multiuser, multitasking capabilities of the '386 CPU, especially for executing software written for less powerful personal computers.

One way to more fully utilize the capabilities of a '386 CPU is to form a multiuser system of remote terminals that use the '386 CPU on a time-share basis. However, the use of remote terminals presents a problem for executing software that is written for the personal computer. The '386 CPU must have direct access to whatever operating hardware the software may request at the remote work station. For example, programs for such diverse applications as spread sheets and word processing require direct access to video memory for displaying high resolution graphics. Conventional software packages that have been written for a single user, single tasking personal computer are not compatible with a multiuser, time-share system of the type otherwise permitted by the '386 microprocessor because the software cannot access the operating hardware located at the remote terminal.

Various attempts have been made to link personal computers to permit multiple users to share both hardware and software. One common approach is the local area network (LAN). A LAN can provide peer to peer data communications but not centralized management and control of the type permitted by the new generation PC. Most LAN networks are expensive because each personal computer in the network requires a separate network card to interface with the network and the industry does not have an accepted standard LAN or LAN interface. Conventional LAN's, and other networking systems, transfer data between stations at a slow rate which is totally inadequate for the high resolution, interactive graphics contained in numerous software packages.

The art recognizes a need for a multiuser computer system for executing high resolution, interactive graphics packages in a real time, time-share system. The art also recognizes a need to economically link remote terminals with a central computer using hardware that is fully compatible with the software written for the single user, single tasking generation of personal computer.

The present invention provides a method as claimed in claim 15 and apparatus as claimed in claim 1 for electronically transferring data, especially high resolution video graphics data, between a remote terminal and a central processing unit that is so fast that the remote terminal functions as if it were hardwired to the CPU. A high speed data link enables each remote terminal to function as if it were an element of operating hardware that is hardwired to the data bus of a host controller such as a memory unit. The data link also enables the host controller to function as if it were hardwired to the data bus of the remote terminal. Thus, the hardware of the host controller is local to each remote terminal. Control logic encodes data for high speed transfer and separate control logic places the transferred data into a form suitable for processing on a data bus at the other end of the data link. The data link can connect personal computers in a real time, time-share network that enables remote stations to share hardware and software that is distributed at remote locations. The hardware does not require modifying the software written for the single user, single tasking generation of personal computer, including software having high resolution, interactive graphics.

US-A-4 577 317 describes a bus extender comprising a local and remote station or terminal, each having a transmit and receive section. Each terminal terminates a parallel bus and is connected by means of a serial half duplex communications link. It differs from the approach of the present invention in that it uses a multi-packet approach with handshaking protocol and error detection, requiring the packets to be reassembled in the remote terminal. This requires multiple bus cycles to communicate that data to the remote material that can be communicated in a single cycle using data link and method of the present invention as respectively defined in claims 1 and 15. Thus, the present invention takes the data and address information directly off the host bus and transmits it in a single packet, using the host processor wait line to allow the transfer to take place in a single bus cycle. Accordingly, the present invention, when used with a low error rate, fast transmission medium such as optical fibre, provides virtually instantaneous and protocol-less data transfer with no packet reassembly being required.

While intercommunicating local bus systems are known, for example as disclosed in US-A-4 038 644, the use therein of a bus extender as disclosed in US-A-4 577 317 would still fail to provide the rapid protocol-less data transfer as advantageously achieved with the present invention.

In the preferred embodiment of the apparatus for implementing the present invention, the data is transferred between stations over a very high speed serial data transmission line at a rate of, for example, 25 Megabits/see. Fibre optic duplex cables connect a host controller with one or more remote terminals. One fibre optic cable carries the data from the host terminal to the remote terminal and the other cable carries data from the remote controller to the host controller. Specially dedicated, high speed, hardwired electronic logic, such as 74F series TTL hardwired logic, encodes the parallel stream of data from a first data bus to a serial data format, transfers the data over a serial data link, and decodes the data at a second data bus back into a parallel stream so that slower speed hardware may direct the data to the appropriate operating hardware.

The remote terminal may execute applications software contained at the host controller as if the software were run on hardware that is hardwired to the data bus of the remote terminal. The host controller may execute existing personal computer software, without modification, in response to commands from the remote terminal because the software has direct access to all operating hardware on the data bus of the remote terminal. For example, an interactive computer graphics package that is executed on the host controller has direct access to the video memory of the remote terminal over the data link so that the graphics may be both displayed and modified at the remote terminal in real time. Different remote terminals may execute different software at the host controller so that the host controller functions in a multitasking, multiuser mode. The host controller may access hardware at the remote terminal that is unrelated to the demands of the particular software package then being accessed by the remote terminal so that the remote terminals also may operate in a multitasking mode. Thus, the present invention permits a multiple number of remotely positioned terminals to function in a real time, multitasking, multiuser, time-share computer system independently of the graphics resolution or hardware demands of the software.

The present invention greatly simplifies the connections required to transfer data, particularly video information, between computers and remote terminals. The relatively simple hardware required to implement the present invention reduces the cost of the data link. Further, the simplicity of the method by which the data is transferred also permits establishing an industry standard for electronic data transfer between computers and remote terminals.

The invention is illustrated with a system for connecting a number of relatively unsophisticated remote terminals to a host controller. The host controller executes the applications software in response to commands received from the remote terminals in real time on an interactive, time-share basis. Alternately, the invention permits linking remote, autonomous personal computers in an interactive, real time network so that the PC's can exchange information, including video information, in real time.

### BRIEF OF DESCRIPTION OF THE DRAWINGS

Figure 1 is a block diagram of a graphics terminal and associated host and for implementing the present invention;
Figure 2 represents a format for transmitting data from the host controller to the remote terminal;
Figure 3a represents the format for directing interrupt requests from the remote terminal to the host controller;
Figure 3b represents the format for returning data from the remote terminal to the host controller in response to a read request from the host controller;
Figure 3c represents the format for a write command directed from the remote terminal to the host controller;
Figure 4a is a flow chart of the logical steps performed in receiving data at the host controller;
Figure 4b is a flow chart of the logic steps executed in transmitting data from the host controller;
Figure 4c is a flow chart of the logic steps for receiving data at the host controller;
Figure 5a is a flow chart of the logic steps for transmitting data from a remote terminal; and
Figure 5b is a flow chart of the logic steps for receiving data at the remote terminal.

### DETAIL DESCRIPTION OF THE PREFERRED EMBODIMENT

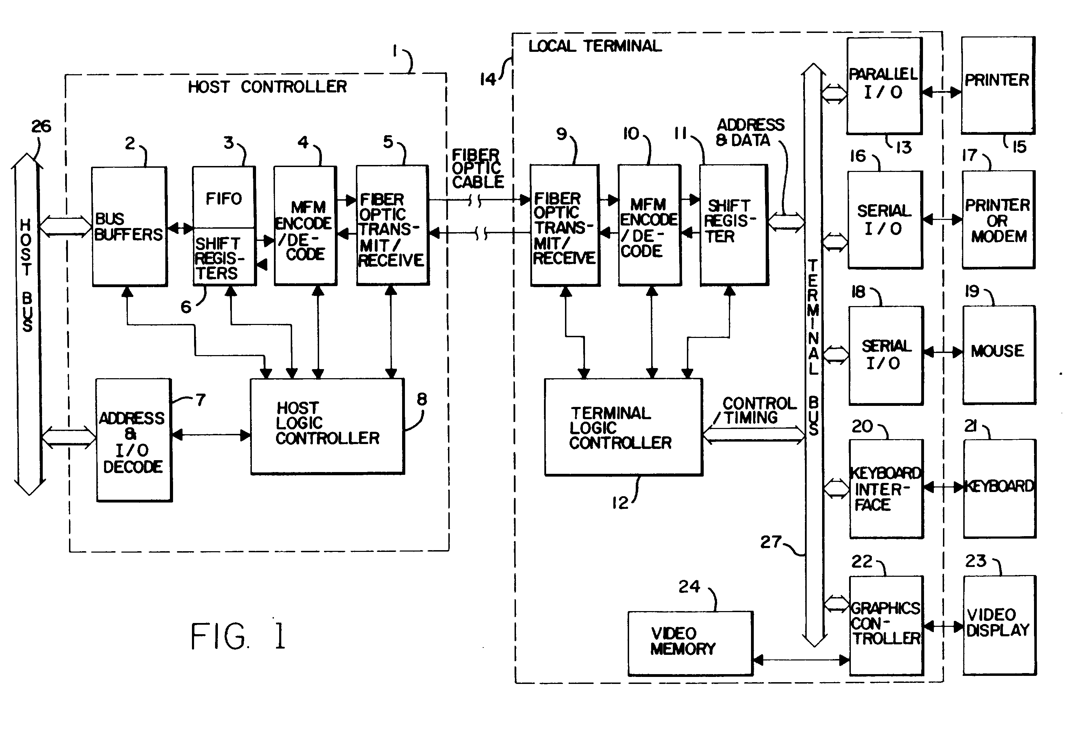

Figure 1 is a block diagram of the graphics terminal system for a remote terminal and host controller according to the present invention. Printer 15, modem 17, mouse 19, keyboard 21 and video display unit 23 are input/output devices for a personal computer that are well known in the art. Remote terminal 14 comprises parallel port 13, serial port 16, serial port 18, key board interface unit 20 graphics controller 22 and video memory unit 24 which are hardware elements of a personal computer well known in the art as found on the IBM XT or AT series PC. Elements 13, 16, 18, 20 and 22 are connected to a remote terminal bus 27. Remote terminal bus 27 also exchanges data with a fiber optic transmitter/receiver unit 9 through MFM encode/decode unit 10 and shift register 11 under the control of terminal logic controller 12. The MFM unit operates on a pulsed form of the Miller code. Host controller 1 comprises a host data bus 26 which exchanges data with fiber optic transmit receive unit 5 through bus buffer 2, FIFO register 3 and MFM encode/decode unit 4 under the control of host controller 8. Alternately, other encode/decode methods could be used such as Manchester II or 4B5B

The interactive hardware logic and communications system of the host controller 1 and remote terminal 14 are constructed such that remote terminal bus 27 appears to physically reside in a memory unit accessible to host bus 26. Thus, data from remote terminal bus 27 may be accessed as data from a conventional memory unit. Address and input/output decoder unit 7 accept commands from the host bus 26 in combination with host logic controller 8, bus buffers 2, FIFO unit 3 and shift register 6. Selective transfer commands are directed to the remote terminal 14 through MFM encoder/decoder unit 4.

Fiber optic transmit and receive units 5 and 9 may be any optical fiber transmission system that is capable of transmitting at 25 megahertz or higher, one such system being manufactured by the Hewlett Packard Corporation of San Jose, CA. Fiber optic transmit/receive units 5 and 9 use a duplex cable having two fiber optic cables. One fiber optic cable carries signals from host controller 1 to remote terminal 14 while the second cable carries signals from remote terminal 14 to host controller 1. Also, fiber optic cable is preferred over coaxial cable because fiber optic cable can transmit data at a faster speed that is more appropriate for handling the high speed serial data transmission required by the present invention. Fiber optic cable does not emit electromagnetic radiation and is not susceptible to electromagnetic interference as is coaxial cable.

The MFM encode/decode units 4 and 10 and logic controllers 8 and 12 are made from 74F series high speed TTL logic such as manufactured by Fairchild. The logic is preferably hardwired to form a Richardson controller that is specially dedicated to the specific task of controlling data processing. The controllers encode parallel data from one data bus into a serial data stream and decode the serial data back to a parallel stream in the format of the receiving bus "on the fly", in real time as the data is generated. The logic controllers might be replaced with a general purpose microprocessor capable of executing the programming with sufficient speed, although no microprocessor known at present has sufficient processing speed. The bus buffer 2, address and decode unit 7, FIFO unit 3 and shift registers 6 and 11 may be made from slower speed LS logic. Host bus 26 may be any of several data bus configurations such as Multibus, VME, Q-BUS, or the data bus used on the IBM Models XT and AT personal computers. The FIFO units 3 and 11, however, should not be used with this later bus because the period of time required to empty the FIFO may exceed the time needed to refresh the bus. With a higher performance bus, however, the FIFO enables the host controller 8 to continue transferring data to the remote terminal while the CPU on the host bus does something else. Thus, the FIFO's reduce the number of times that the CPU must address each remote terminal.

As presently contemplated, host logic controller 8 and terminal logic controller 12 provide all timing and control functions necessary to transfer data between the remote terminal and host controller. To ensure that the remote terminal is physically "mapped" onto the host controller, it is necessary that the encode, decode and transfer operations occur on the fly, which typically involves processing at very high speed such as 25MHz or higher. The data bus is dedicated primarily to updating the video memory with much less time processing time being spent communicating with the CPU.

The type of data bus used at the host controller or remote terminal may establish a minimum rate for data transfer. Some busses, such as found on the IBM XT and AT series personal computer, require that the video memory be periodically refreshed. If too much time is spent in video write, the refresh time is exceeded and the memory lost. If the transfer rate is too slow, the refresh time is exceeded before a complete message is stored. While the minimum time varies depending on the particular data bus, it is believed that the transfer rate must be at least 15 Megabits/sec. It is to be appreciated, however, that a higher performance data bus that does not need to be periodically refreshed does not have a minimum transfer rate.

Address and input/output decoder 7 transfers requests for memory and output write commands from host bus 26 to host logic controller 8. The host controller coordinates the transfer of data through bus buffers 2 and optional FIFO 3 or shift register 6. The serialized data is encoded by MFM encode and decode unit 4 for transmission by fiber optic transmitter 5.

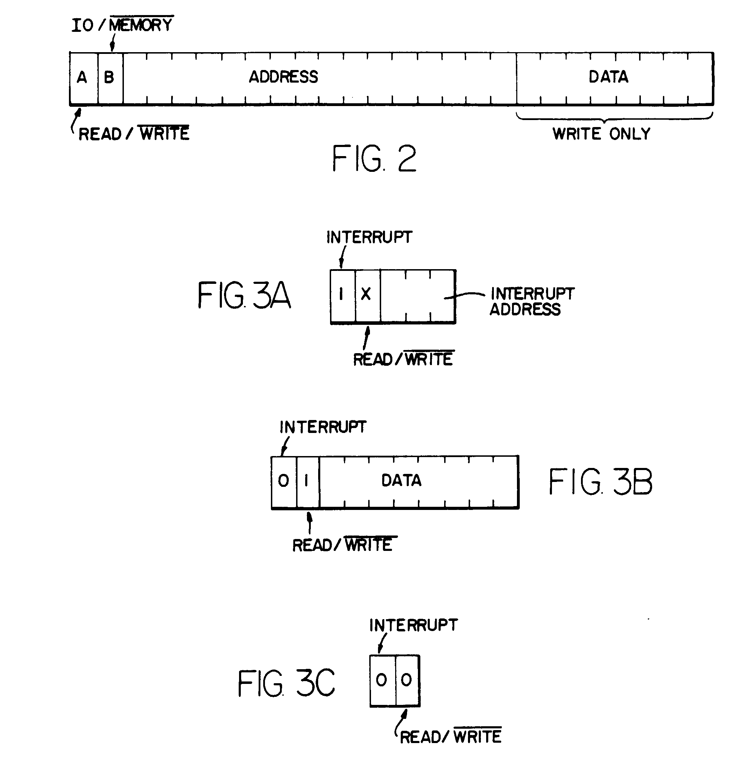

A signal receiver in fiber optic transmitter/receiver unit 9 receives the optical signal and transfers data to a MFM encode/decode Unit 10. The incoming signal is buffered in shift register unit 11 until terminal logic controller 12 determines that the transmission is complete. The terminal controller then provides control and timing information to remote terminal bus 27 so that the output from shift register 11 may be directed to the appropriate output port or memory location. After a period of time sufficient to transfer data, terminal logic controller 12 sends an acknowledgment signal to the host controller. The format of the acknowledgment signal is illustrated in Figure 3c.

Host data bus 26 generates memory and input read commands in the same manner as described above with two exceptions. The first exception is that the CPU of the host controller (not shown) must wait for all previously received access requests to the terminal to be emptied from the buffer before receiving the next read information and resuming normal operation. The second exception is that the terminal controller 12 must use a slightly different data format, shown of figure 3b, to return the requested data from a memory or input port.

Terminal controller 12 generates an interrupt to the host controller 8 to request an interrupt on host bus 26 in response to an interrupt generated by any of the peripheral devises 15, 17, 19 or 21. The host controller 8 maintains the information on the source of the interrupt in address and decode unit 7 for transfer to host data bus 26.

Figure 2 illustrates the format for data contained in a host initiated command. The first two bits of the frame, A and B, determine whether the command is a read or write command and whether the data transfer is directed to an I/O port or to a memory device. The bits that follow contain the address of the data. Data bits follow the address only if the command is a write command. Thus, placing the read/write bits in front of the address eliminates having to read the eight bits of address when the command is a read command.

Figure 3a illustrates an interrupt request directed from the remote terminal to the host controller. A true value in the first bit indicates that the received message is an interrupt address. The remaining bits define the address of the source of the interrupt.

Figure 3b illustrates the format of the data format for acknowledging a read command. The first bit is a 0 or "false" followed by a 0 or "false". The following bits contain the data requested by the host controller.

Figure 3c illustrates the data format in which the interrupt bit is set to 0 or "false" and the read bit is set to 1 or "true" in order to acknowledge the receipt of a write command.

The transmission of the data between the host controller and the remote terminal may be done either in a synchronous or asynchronous format. The synchronous format is conceptually easier to implement but requires more processing hardware to distinguish between a null transmission and real data. In addition to requiring less hardware, the asynchronous format is faster because the logic controllers need not recognize a data transmission since no signal is transmitted unless data is also being transmitted. The asynchronous format, however, is more difficult to implement. The preferred embodiment of the present invention comprises a hybrid transmission format in which synchronous data transmissions are transmitted asynchronously. The logic controllers have no difficulty in recognizing data because no signal is transmitted unless data is also present. The process of decoding the data at the receiving controller, however, is essentially that for decoding synchronous data. The hybrid transmission format set forth in detail below is considered to produce the maximum rate of data transfer with the minimum amount and complexity of hardware.

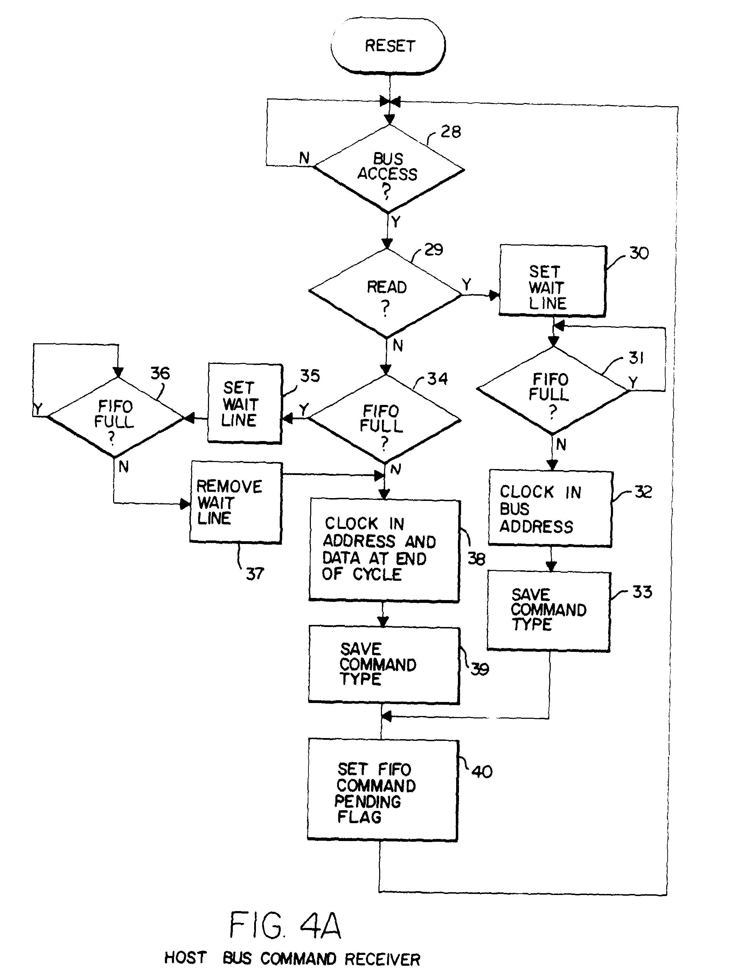

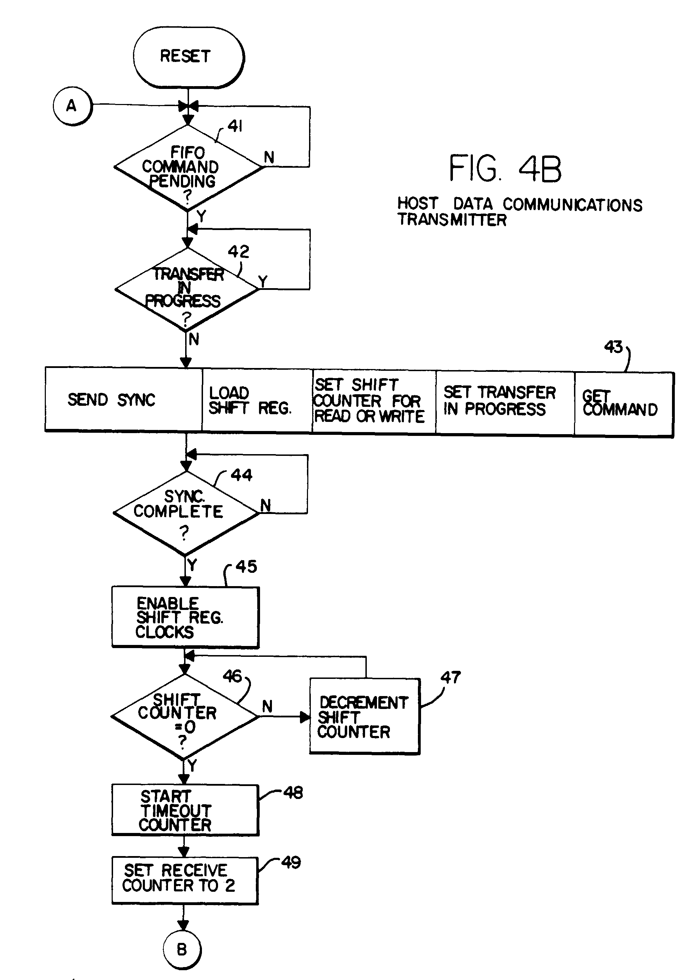

Figure 4a is a flow chart of logic operations at the host controller that occur in response to an initiation request from the host bus. The host controller remains in an idle state until a bus access occurs at step 28. If the request from the host is a "read" request at step 29, a wait request line is activated at step 30. The host controller 8 then waits until room is available in FIFO memory buffer 3. Once space is available, the controller clocks the bus address at step 32 and saves the command type at step 33. A "FIFO command pending" flag is set at step 40 which initiates the processing steps shown in Figure 4b. If the command was not a "read" at step 29, then the controller 8 determines at step 34 if the FIFO buffer is full. If the FIFO buffer is full, a wait line to the host is set at step 35 and the FIFO status is monitored at step 36 until space is available at which time the wait line is removed as step 37. The address and data is then clocked in at the end of the next cycle as step 38 and the command type is saved at step 39. The "FIFO command pending" flag is set which activates the process shown in Fig 4b. If the FIFO was not full at step 34, the address and data is clocked in at step 38, the command type is saved at step 39 and the "FIFO command pending" flag is set at step 40.

Figure 4b describes the host data communications transmitter operations. The host logic controller 8 monitors the FIFO command pending flag at step 44. When the flag is set, the controller waits if another transfer is in process as step 42. Once the previous transfer is complete, synchronization SYNC bits are transmitted, the shift register is loaded, the shift counter is set for read or write as appropriate, a "transfer-in-progress" flag is set, and the command is loaded at step 43. A delay occurs until SYNC is completed at step 44 at which time the shift register clocks are enabled at step 45. The shift counter is tested for equality to zero at step 46. If not equal to zero, the counter is decremented at step 47 and checked again at step 46. When the counter equals zero, a time-out counter is initiated at step 48 and the receive counter is set equal to 2 at step 49.

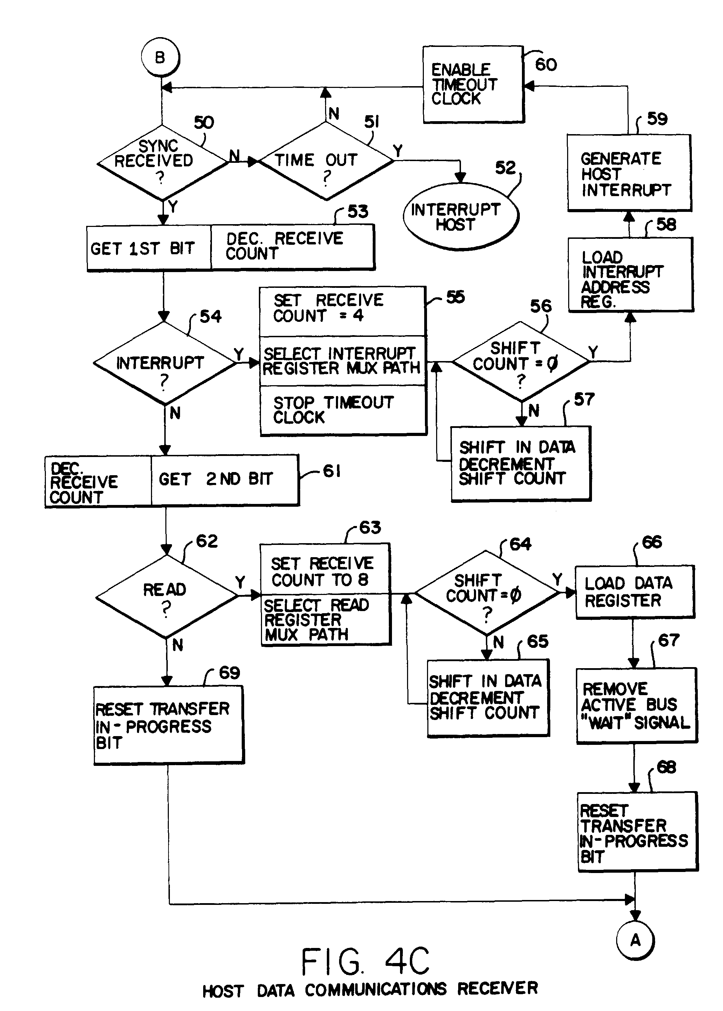

Figure 4c illustrates the host data communications receiver logic which begins awaiting a response from the remote terminal 14. The MFM decoder 4 is monitored for SYNC step 50 or a time-out counter step 51. If a time-out occurs, the host processor is interrupted at step 52 to signify an error condition. If the SYNC is received at step 50, the host controller 8 extracts the first bit and decrements the receive count at step 53. The host controller then checks the first bit to see if it is an interrupt at step 54. If so, the controller sets the receive count equal to 4, selects the interrupt register multiplexer path and stops the time-out clock at step 55. The shift count is tested for equality to zero at step 56. If the shift count is not equal to zero at step 56, an interrupt is generated at step 59 and the time-out clock is enabled at step 60. The process then reenters the loop which tests for SYNC received at step 50 and a time-out at step 51. If the first bit detected at step 53 was not an interrupt at step 54, then the receive count is decremented and the second bit extracted at step 61. The second bit is tested for a read value at step 62 which, if "true", sets the receive count equal to 8 and selects the read register multiplexer path at step 63. The shift count is tested for equality to zero at step 64 which, if not true, shifts counts equals zero and decrements the shift register at step 65. When the shift count equals zero, the data register is loaded at step 66, the host bus wait signal is deactivated at step 67, and the "transfer-in-progress" bit is reset at step 68. If the second bit at step 61 is not a read at step 62, the "transfer-in-progress" bit is reset. After the "transfer-in-progress" bit is reset at either steps 68 or 69, the controller resumes testing the "FIFO command pending" flag at step 41.

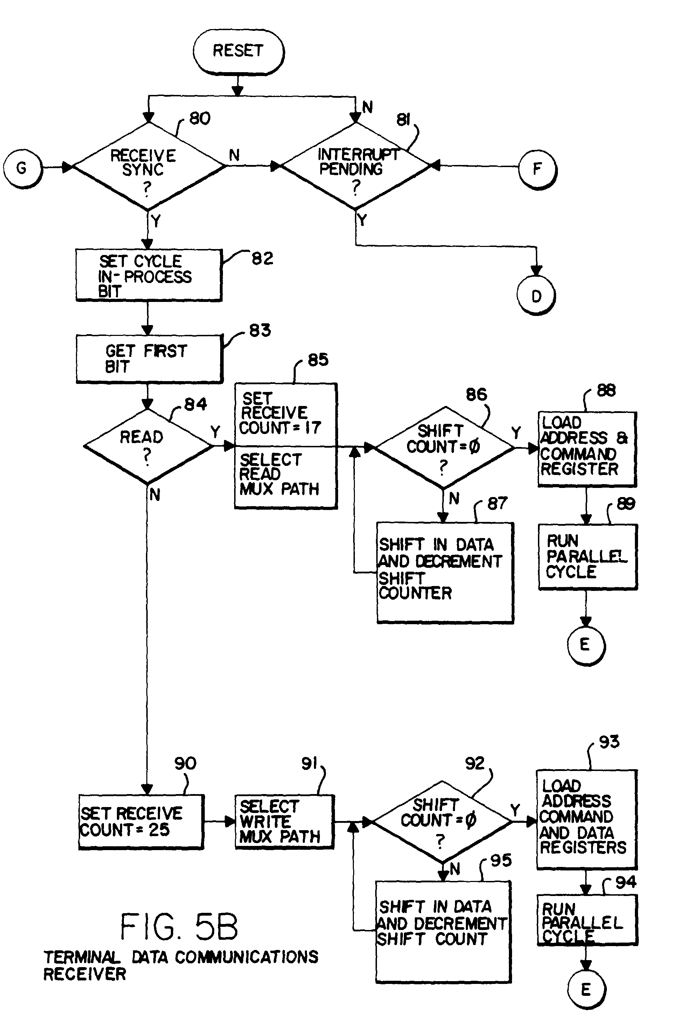

Figure 5b is a flow chart of the functions of the data communications receiver for the remote terminal. The terminal logic controller 12 begins by continuously testing for received SYNC at step 80, and an interrupt pending flag at step 81. If SYNC is received at step 80, a "cycle-in-progress" bit is set at step 82 and the first bit is extracted and tested for a "true" read value at step 84. A read command sets the receive count equal to 17 and selects the read multiplexer path at step 85. The shift count is tested for zero at step 86 which, if false, shifts data and decrements the shift counter at step 87. When the shift count equals zero, the address and command registers are loaded at step 88 and the parallel cycle is initiated at step 89. If the first bit at step 83 is not a read at step 84, then the receive count is set equal to 25 at step 90 and the write multiplexer path is selected at step 91. The shift count is checked for zero at step 92 which, if "false", shifts the data and decrements the shift count as step 95. When the shift count does equal zero, the address, command, and data registers are loaded at step 93 and the parallel cycle is initiated at step 94.

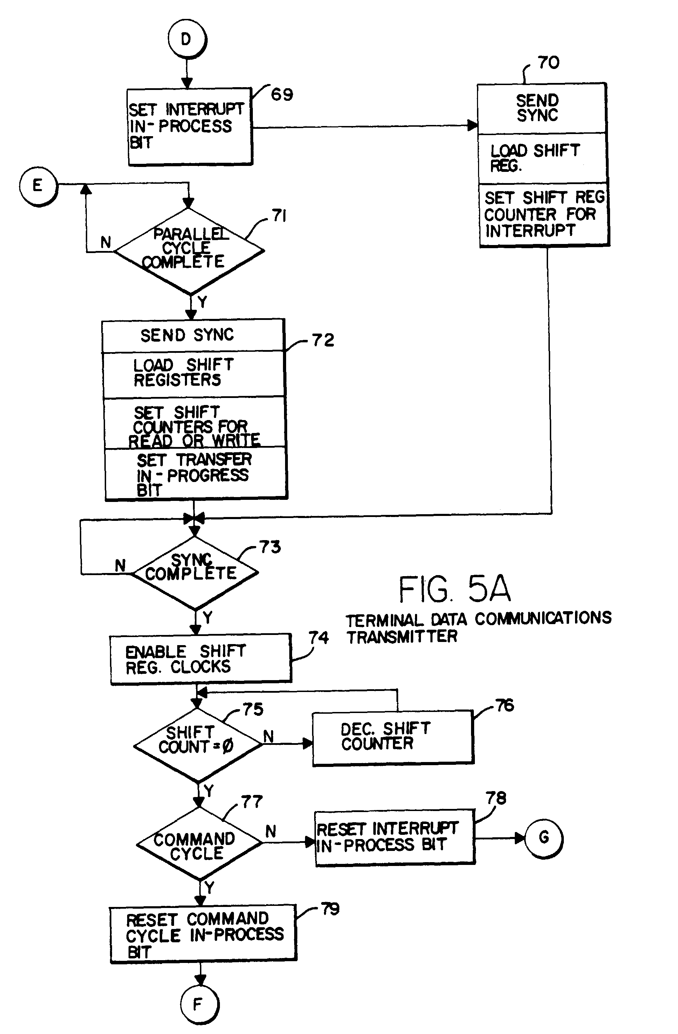

Figure 5a is a flow chart of the logic steps involved in transmitting communications data from the host controller to the remote terminal. Once the parallel cycle has been initiated from either a read command at step 89 or a write command at step 94, the terminal logic controller 12 waits for the completion of the parallel cycle at step 71. The terminal logic controller then sends a SYNC, loads the shift registers, sets the shift counters for read or write as appropriate, and sets the "transfer-in-progress" bit at step 72. The terminal controller waits for the end of the SYNC pattern at step 73 at which time the terminal controller enables the shift register clocks at step 74. The shift counter is checked for zero at step 75 and decremented if not equal to zero at step 76. If the shift count does equal zero at step 75, the controller determines if a command cycle exists at step 77 which, if "true", resets the command "cycle-in-progress" bit at step 79. If the command cycle is not true at step 77, the "interrupt-in-progress" bit is set at step 78 and the processing returns to testing for received SYNC and an interrupt pending at step 81. If an interrupt is pending at step 81, the "interrupt-in-progress" bit is set at step 69, SYNC is initiated, the shift registers are loaded and the shift register counter is set for interrupt. The interrupt message is then transmitted to the host in the same manner as a read or write message as previously described. At the end of the interrupt message the "interrupt-in-progress" flag is reset. The controller 12 begins testing for SYNC at step 80 as previously described.

## Claims

1. A data link comprising:
a host controller (1) having a central processing unit for executing software;
a first data bus (26) coupled to said host controller, said first data bus having a plurality of parallel command streams, each command stream comprising data;
a remote terminal (14), said remote terminal having a video display (23) and associated video memory (24);
a second data bus (27) coupled to said remote terminal, said second data bus having a plurality of parallel command streams, each command stream comprising data;
means (2,3,4) associated with said host controller (1) for encoding data on each of said command streams from said first data bus (26) into serialised data;
means (5) for transmitting said serialised data from said first data bus (26) to said second data bus (27);
control means (8) associated with said host controller (1) for controlling the encoding and transmitting means (2,3,4,5) at said first data bus (26) using a timing signal and a first status indicator;
means (5) associated with said host controller (1) for receiving serialised data from said second data bus (27) at said first data bus (26);
means (4) for decoding said serialised data from said second data bus (27) into parallel streams of data at first data bus (26);
control means (8) associated with said host controller (1) for controlling the receiving and decoding means (4,5) at said first data bus (26) using said first status indicator;
means (9) associated with said remote terminal (14) for receiving serialised data from said first data bus (26) at said second data bus (27);
means (10) associated with said remote terminal (14) for decoding said serialised data from said first data bus (26) into parallel streams of data at said second data bus (27);
control means (12) associated with said remote terminal (14) for controlling the receiving and decoding means (9,10,11) at said second data bus (27) using a second status indicator;
means (10) associated with said remote terminal (14) for encoding data on each of said command streams from said second data bus (27) into serialised data;
means (9) for transmitting said serialised data from said second data bus (27) to said first data bus (26); and
control means (12) associated with said remote terminal (14) for controlling the encoding and transmitting means (9,10) at said second data bus (27), according to said first and second status indicators.

2. A data link as claimed in claim 1, wherein said means (5) for transmitting data from said first data bus (26) to said second data bus (27) comprises a first transmission channel for transmitting a first single stream of encoded data; and said means (9) for transmitting data from said second data bus (27) to said first data bus (26) comprises a second transmission channel for transmitting a second single stream of encoded data.

3. A data link as claimed in claim 2, wherein said first and second transmission channels comprise respective fibre optical links.

4. A data link as claimed in claim 2 or 3, wherein said means (5) for transmitting data from said first data bus (26) to said second data bus (22) and said means (9) for transmitting data from said second data bus (27) to said first data bus (26) each comprises means for transmitting said data at a frequency of at least 15 MHz.

5. A data link as claimed in any one of claims 2 to 4, wherein said first and second data streams are encoded in a synchronous transmission format.

6. A data link as claimed in any one of claims 2 to 4, wherein said first and second data streams are encoded in an asynchronous transmission format.

7. A data link as claimed in any one of claims 2 to 4, wherein said first and second data streams are synchronously encoded in an asynchronous transmission format.

8. A data link as claimed in any preceding claim, wherein said means (5) for encoding and transmitting data and receiving and decoding data at said first data bus (26), and said means (9) for receiving and decoding data and encoding and transmitting data at said second data bus (27) both comprise specially dedicated, hardwired logic.

9. A data link as claimed in claim 8, wherein said hardwired logic comprises a Richardson controller.

10. A data link as claimed in claim 8, wherein said hardwired logic is formed from 74F TTL logic.

11. A data link as claimed in any preceding claim, further comprising:
means for generating video graphics information on said first data bus (26);
means (22) for receiving said video graphics information on said second data bus (27); and
means (23) for displaying said video graphics information at said remote terminal.

12. A data link as claimed in claim 11, wherein said means (5) for transmitting data from said first data bus (26) to said second data bus (27) comprises means for transmitting said video graphics information from said first data bus (26) to said second data bus (27).

13. A data link as claimed in any preceding claim, wherein said first and second data buses (26,27) are components of a first and second autonomous computer, respectively, said first and second data buses (26,27) being hardwired to first and second CPUs, respectively.

14. A data link as claimed in claim 13, wherein said autonomous computer comprises a personal computer (PC).

15. A method of transferring data, comprising the steps of:
transmitting a first set of data from a first data bus (26) of a host controller (1) to a second data bus (27) of a remote terminal (14) and to operational hardware (23, 24) on said second bus, said step of transmitting comprising the steps of
encoding said first set of data from a parallel command stream on said first data bus (26) to a first set of serial data,
transmitting said first set of serial data to said second data bus (27) using first and second status indicators, and
decoding said first set of serial data onto a parallel command stream on said second data bus (27); and
transmitting a second set of data from said second data bus (27) to said first data bus (26) and to operational hardware on said first data bus (26), said step of transmitting comprising the steps of
encoding said second set of data from a parallel command stream on said second data bus (27) to a second set of serial data,
transmitting said second set of serial data to said first data bus (26) using first and second status indicators, and
decoding said second set of serial data onto a parallel command stream on said first data bus (26).

16. A method as claimed in claim 15, wherein said operational hardware (23, 24) on said second data bus (27) comprises a display (23) and a video memory (24).

17. A method as claimed in claims 15 or 16, further comprising the steps of
generating video graphics information on said first data bus (26);
receiving said video graphics information on said second data bus (27); and
displaying said video graphics information at said remote terminal.

18. A method as claimed in claim 15, 16 or 17 further comprising the steps of
formatting video graphics information into a set of data frames;
transmitting said data frames asynchronously; and
preceding said data frames with an indication of whether the data frame is a read or write request.

19. A method as claimed in any one of claims 15 to 18, further comprising the step of
receiving data from additional remote terminals at said host controller (1) in a time-share manner.

## Patentansprüche

1. Datenübertragungsstrecke, umfassend:
eine Hauptsteuerung (1) mit einer zentralen Verarbeitungseinheit zum Ausführen von Software;
einen ersten Datenbus (26), der an die Hauptsteuerung gekoppelt ist und mehrere parallele Befehlsströme aufweist, von denen jeder Befehlsstrom Daten enthält;
ein Fernterminal (14) mit einer Videoanzeige (23) und einem dazugehörigen Videospeicher (24);
einen zweiten Datenbus (27), der an das Fernterminal gekoppelt ist und mehrere parallele Befehlsströme enthält, von denen jeder Befehlsstrom Daten enthält;
eine der Hauptsteuerung (1) zugeordnete Einrichtung (2, 3, 4) zum Kodieren von Daten bezüglich jedes der Befehlsströme von dem ersten Datenbus (26) in serialisierte Daten;
eine Einrichtung (5) zum Senden der serialisierten Daten von dem ersten Datenbus (26) zu dem zweiten Datenbus (27);
eine der Hauptsteuerung (1) zugeordnete Steuereinrichtung (8) zum Steuern der Kodier- und der Sendeeinrichtung (2, 3, 4, 5) an dem ersten Datenbus (26) unter Verwendung eines Zeitsteuersignals und eines ersten Statusanzeigers;
eine der Hauptsteuerung (1) zugeordnete Einrichtung (5) zum Empfangen von serialisierten Daten von dem zweiten Datenbus (27) an dem ersten Datenbus (26);
eine Einrichtung (4) zum Dekodieren der serialisierten Daten von dem zweiten Datenbus (27) zu parallelen Datenströmen auf dem ersten Datenbus (26);
eine der Hauptsteuerung (1) zugeordnete Steuereinheit (8) zum Steuern der Empfangs- und der Dekodiereinrichtung (4, 5) an dem ersten Datenbus (26) unter Verwendung des ersten Statusanzeigers;
eine dem Fernterminal (14) zugeordnete Einrichtung (9) zum Empfangen serialisierter Daten von dem ersten Datenbus (26) an dem zweiten Datenbus (27);
eine dem Fernterminal (14) zugeordnete Einrichtung (10) zum Dekodieren der serialisierten Daten von dem ersten Datenbus (26) zu parallelen Datenströmen auf dem zweiten Datenbus (27);
eine dem Fernterminal (14) zugeordnete Steuereinrichtung (12) zum Steuern der Empfangs- und der Dekodiereinrichtung (9, 10, 11) an dem zweiten Datenbus (27) unter Verwendung eines zweiten Statusanzeigers;
eine dem Fernterminal (14) zugeordnete Einrichtung (10) zum Kodieren von Daten in jedem der Befehlsströme von dem zweiten Datenbus (27) in serialisierte Daten;
eine Einrichtung (9) zum Senden der serialisierten Daten von dem zweiten Datenbus (27) zu dem ersten Datenbus (26); und
eine zu dem Fernterminal (14) gehörige Steuereinrichtung (12) zum Steuern der Kodier- und der Sendeeinrichtung (9, 10) an dem zweiten Datenbus (27) nach Maßgabe des ersten und des zweiten Statusanzeigers.

2. Datenübertragungsstrecke nach Anspruch 1, bei der die Einrichtung (5) zum Senden von Daten von dem ersten Datenbus (26) zu dem zweiten Datenbus (27) einen ersten Übertragungskanal zum Übertragen eines ersten einzelnen Stroms kodierter Daten aufweist, und die Einrichtung (9) zum Senden von Daten von dem zweiten Datenbus (27) zu dem ersten Datenbus (26) einen zweiten Übertragungskanal zum Übertragen eines zweiten einzelnen Strom kodierter Daten aufweist.

3. Datenübertragungsstrecke nach Anspruch 2, bei der der erste und der zweite Übertragungskanal jeweils eine Lichtleitfaserstrecke aufweisen.

4. Datenübertragungsstrecke nach Anspruch 2 oder 3, bei der die Einrichtung (5) zum Senden von Daten von dem ersten Datenbus (26) zu dem zweiten Datenbus (27) sowie die Einrichtung (9) zum Senden von Daten von dem zweiten Datenbus (27) zu dem ersten Datenbus (26) jeweils eine Einrichtung zum Übertragen von Daten bei einer Frequenz von mindestens 15 MHz aufweist.

5. Datenübertragungsstrecke nach einem der Ansprüche 2 bis 4, bei der der erste und der zweite Datenstrom in einem synchronen Übertragungsformat kodiert sind.

6. Datenübertragungsstrecke nach einem der Ansprüche 2 bis 4, bei der der erste und der zweite Datenstrom in einem asynchronen Übertragungsformat kodiert sind.

7. Datenübertragungsstrecke nach einem der Ansprüche 2 bis 4, bei der der erste und der zweite Datenstrom innerhalb eines asynchronen Übertragungsformats synchron kodiert sind.

8. Datenübertragungsstrecke nach einem der vorhergehenden Ansprüche, bei der die Einrichtung (5) zum Kodieren und Senden von Daten sowie zum Empfangen und zum Dekodieren von Daten an dem ersten Bus (26) und die Einrichtung (9) zum Empfangen und Dekodieren von Daten sowie zum Kodieren und Senden von Daten an dem zweiten Datenbus (27) beide eine spezielle Festverdrahtungslogik aufweisen.

9. Datenübertragungsstrecke nach Anspruch 8, bei der die Festverdrahtungslogik eine Richardson-Steuerung aufweist.

10. Datenübertragungsstrecke nach Anspruch 8, bei der die Festverdrahtungslogik durch eine 74F-TTL-Logik gebildet wird.

11. Datenübertragungsstrecke nach einem der vorhergehenden Ansprüche, weiterhin umfassend:
eine Einrichtung zum Generieren von Videographikinformation auf dem ersten Datenbus (26);
eine Einrichtung (22) zum Empfangen der Videographikinformation auf dem zweiten Datenbus (27); und
eine Einrichtung (23) zum Anzeigen der Videographikinformation an dem Fernterminal.

12. Datenübertragungsstrecke nach Anspruch 11, bei der die Einrichtung (5) zum Senden von Daten von dem ersten Bus (26) zu dem zweiten Bus (27) eine Einrichtung zum Senden von Videographikinformation von dem ersten Bus (26) zu dem zweiten Bus (27) aufweist.

13. Datenübertragungsstrecke nach irgendeinem vorhergehenden Anspruch, bei der der erste und der zweite Datenbus (26, 27) Komponenten eines ersten und eines zweiten, jeweils autonomen Rechners sind, wobei der erste und der zweite Datenbus (26, 27) mit einer ersten bzw. einer zweiten CPU fest verdrahtet sind.

14. Datenübertragungsstrecke nach Anspruch 13, bei der der autonome Rechner einen Personal Computer (PC) aufweist.

15. Verfahren zum Transferieren von Daten, umfassend die Schritte: Senden eines ersten Datensatzes von einem ersten Datenbus (26) einer Hauptsteuerung (1) zu einem zweiten Datenbus (27) eines Fernterminals (14) und zu Betriebshardware (23, 24) an dem zweiten Bus, wobei der Schritt des Sendens folgende Schritte beinhaltet:
Kodieren des ersten Datensatzes aus einem parallelen Befehlsstrom auf dem ersten Datenbus (26) in einen ersten Satz serieller Daten,
Senden des ersten Satzes serieller Daten zu dem zweiten Bus (27) mit Hilfe eines ersten und eines zweiten Statusanzeigers, und
Dekodieren des ersten Satzes serieller Daten zu einem parallelen Befehlsstrom auf dem zweiten Datenbus (27); und
Senden eines zweiten Satzes von Daten von dem zweiten Datenbus (27) zu dem ersten Datenbus (26) und zu Betriebshardware an dem ersten Bus (26) wobei der Schritt des Sendens folgende Schritte beinhaltet:
Kodieren des zweiten Datensatzes aus einem parallelen Befehlsstrom auf dem zweiten Datenbus (27) in einen zweiten Satz serieller Daten,
Senden des zweiten Satzes serieller Daten zu dem ersten Datenbus (26) unter Verwendung eines ersten und eines zweiten Statusanzeigers, und
Dekodieren des zweiten Satzes serieller Daten in einen parallelen Befehlsstrom auf dem ersten Datenbus (26).

16. Verfahren nach Anspruch 15, bei dem die Betriebshardware (23, 24) an dem zweiten Datenbus (27) eine Anzeige (23) und einen Video-speicher (24) aufweisen.

17. Verfahren nach Anspruch 15 oder 16, umfassend die Schritte:
Generieren von Videographikinformation auf dem ersten Datenbus (26);
Empfangen der Videographikinformation an dem zweiten Datenbus (27); und
Anzeigen der Videographikinformation auf dem Fernterminal.

18. Verfahren nach Anspruch 15, 16 oder 17, weiterhin umfassend die Schritte:
Formatieren der Videographikinformation zu einem Satz von Datenblöcken;
Asynchrones Senden der Datenblöcke; und
den Datenblöcken wird eine Anzeige darüber vorangestellt, ob der Datenblock eine Lese- oder eine Schreibanforderung darstellt.

19. Verfahren nach einem der Ansprüche 15 bis 18, umfassend den Schritt:
Empfangen von Daten von zusätzlichen Fernterminals an der Hauptsteuerung (1) im Zeitmultiplexbetrieb.

## Revendications

1. Liaison de données comportant :
une commande hôte (1) ayant une unité centrale de traitement pour exécuter des programmes,
un premier bus de données (26) relié à ladite commande hôte, ledit premier bus de données ayant une pluralité de flux d'instructions parallèles, chaque flux d'instructions comportant des données,
un terminal éloigné (14), ledit terminal éloigné ayant un affichage vidéo (23) et une mémoire vidéo (24) associée,
un second bus de données (27) relié audit terminal éloigné, ledit second bus de données ayant une pluralité de flux d'instructions parallèles, chaque flux d'instructions comportant des données,
des moyens (2, 3, 4) associés à ladite commande hôte (1) pour coder les données véhiculées sur chacun desdits flux d'instructions par ledit premier bus de données (26) en données série,
des moyens (5) pour transmettre lesdites données série depuis ledit premier bus de données (26) vers ledit second bus de données (27),
des moyens de commande (8) associés à ladite commande hôte (1) pour commander les moyens de codage et de transmission (2, 3, 4, 5) audit premier bus de données (36) en utilisant un signal de synchronisation et un premier indicateur d'état,
des moyens (5) associés à ladite commande hôte (1) pour recevoir les données série provenant dudit second bus de données (27) audit premier bus de données (26),
des moyens (4) pour décoder lesdites données série en provenance dudit second bus de données (27) en flux parallèles de données au premier bus de données (26),
des moyens de commande (8) associés à ladite commande hôte (1) pour commander les moyens de réception et de décodage (4, 5) audit premier bus de données (26) en utilisant ledit premier indicateur d'état,
des moyens (9) associés audit terminal éloigné (14) pour recevoir des données série en provenance dudit premier bus de données (26) audit second bus de données (27),
des moyens (10) associés audit terminal éloigné (14) pour décoder lesdites données série en provenance dudit premier bus de données (26) en flux parallèles de données audit second bus de données (27),
des moyens de commande (12) associés audit terminal éloigné (14) pour commander les moyens de réception et de décodage (9, 10, 11) audit second bus de données (27) en utilisant un second indicateur d'état,
des moyens (10) associés audit terminal éloigné (14) pour coder les données véhiculées sur chacun desdits flux d'instructions par ledit second bus de données (27) en données série,
des moyens (9) pour transmettre lesdites données série en provenance dudit second bus de données (27) vers ledit premier bus de données (26), et
des moyens de commande (12) associés audit terminal éloigné (14) pour commander les moyens de codage et de transmission (9, 10) audit second bus de données (27), conformément auxdits premier et second indicateurs d'état.

2. Liaison de données selon la revendication 1, dans laquelle lesdits moyens (5) pour transmettre des données depuis ledit premier bus de données (26) vers ledit second bus de données (27) comportant un premier canal de transmission destiné à transmettre un premier flux unique de données codées, et lesdits moyens (9) pour transmettre des données depuis ledit second bus de données (27) vers ledit premier bus de données (26) comportent un second canal de transmission pour transmettre un second flux unique de données codées.

3. Liaison de données selon la revendication 2, dans laquelle lesdits premier et second canaux de transmission sont constitués par des liaisons optiques en fibres respectives.

4. Liaison de données selon la revendication 2 ou 3, dans laquelle lesdits moyens (5) pour transmettre des données depuis ledit premier bus de données (26) vers ledit second bus de données (22) et lesdits moyens (9) pour transmettre des données depuis ledit second bus de données (27) vers ledit premier bus de données (26) comportent chacun des moyens pour transmettre lesdites données à une fréquence d'au moins 15 MHz.

5. Liaison de données selon l'une quelconque des revendications 2 à 4, dans laquelle lesdits premier et second flux de données sont codés dans un format de transmission synchrone.

6. Liaison de données selon l'une quelconque des revendications 2 à 4, dans laquelle lesdits premier et second flux de données sont codés dans un format de transmission asynchrone.

7. Liaison de données selon l'une quelconque des revendications 2 à 4, dans laquelle lesdits premier et second flux de données sont codés de manière synchrone dans un format de transmission asynchrone.

8. Liaison de données selon l'une quelconque des revendications précédentes, dans lequel lesdits moyens (5) pour coder et transmettre des données et recevoir et décoder des données audit premier bus de données (26), et lesdits moyens (9) pour recevoir et décoder des données et coder et transmettre des données audit second bus de données (27) comportent tous deux une logique câblée, spécialement dédiée.

9. Liaison de données selon la revendication 8, dans laquelle ladite logique câblée est constituée d'une commande Richardson.

10. Liaison de données selon la revendication 8, dans laquelle ladite logique câblée est formée d'une logique 74F TTL.

11. Liaison de données selon l'une quelconque des revendications précédentes, comportant de plus :
des moyens pour produire des informations graphiques vidéo sur ledit premier bus de données (26),
des moyens (22) pour recevoir lesdites informations graphiques vidéo sur ledit second bus de données (27), et
des moyens (23) pour afficher lesdites informations graphiques vidéo audit terminal éloigné.

12. Liaison de données selon la revendication 11, dans laquelle lesdits moyens (5) pour transmettre des données depuis ledit premier bus de données (26) vers ledit second bus de données (27) comportent des moyens pour transmettre lesdites informations graphiques vidéo depuis ledit premier bus de données (26) vers ledit second bus de données (27).

13. Liaison de données selon l'une quelconque des revendications précédentes, dans laquelle lesdits premier et second bus de données (26, 27) sont des composants d'un premier et d'un second ordinateur autonome, respectivement, lesdits premier et second bus de données (26, 27) étant reliés par câblage à la première et à la seconde unité centrale de traitement, respectivement.

14. Liaison de données selon la revendication 13, dans laquelle ledit ordinateur autonome est constitué d'un ordinateur personnel (PC).

15. Procédé de transfert de données, comportant les étapes consistants à :
transmettre un premier ensemble de données depuis un premier bus de données (26) d'une commande hôte (1) vers un second bus de données (27) d'un terminal éloigné (14) et vers des circuits opérationnels (23, 24) via ledit second bus, ladite étape de transmission comportant les étapes consistant à
coder ledit premier ensemble de données provenant d'un flux d'instructions transmises en parallèle sur ledit premier bus de données (26) en un premier ensemble de données série,
transmettre ledit premier ensemble de données série vers ledit second bus de données (27) en utilisant des premier et second indicateurs d'état, et
décoder ledit premier ensemble de données série en un flux d'instructions transmises en parallèle sur ledit second bus de données (27), et
transmettre un second ensemble de données en provenance dudit second bus de données (27) vers ledit premier bus de données (26) et vers un circuit operationnel via ledit premier bus de données (26), ladite étape de transmission comportant les étapes consistant à
coder ledit second ensemble de données provenant d'un flux d'instructions transmises en parallèle sur ledit second bus de données (27) en un second ensemble de données série,
transmettre ledit second ensemble de données série vers ledit premier bus de données (26) en utilisant des premier et un second indicateurs d'état, et
décoder ledit second ensemble de données série en un flux d'instructions transmises en parallèle sur ledit premier bus de données (26).

16. Procédé selon la revendication 15, dans lequel lesdits circuits opérationnels (23, 24) disposés sur ledit second bus de données (27) sont constitués d'un affichage (23) et d'une mémoire vidéo (24).

17. Procédé selon la revendication 15 ou 16, comportant de plus les étapes consistant à
produire des informations graphiques vidéo sur ledit premier bus de données (26),
recevoir lesdites informations graphiques vidéo sur ledit second bus de données (27), et
afficher lesdites informatisons graphiques vidéo audit terminal éloigné.

18. Procédé selon la revendication 15, 16 ou 17, comportant de plus les étapes consistant à
formater les informations graphiques vidéo en un ensemble de trames de données,
transmettre lesdites trames de données de manière asynchrone, et faire précéder lesdites trames de données d'une indication indiquant si la trame de données est une demande de lecture ou d'écriture.

19. Procédé selon l'une quelconque des revendications 15 à 18, comportant de plus l'étape consistant à
recevoir des données en provenance d'autres terminaux éloignés à ladite commande hôte (1) de manière partagée dans le temps.
